# EUROPÄISCHE PATENTSCHRIFT

(11) **EP 1 503 121 B1**
(45) Veröffentlichungstag und Bekanntmachung des Hinweises auf die Patenterteilung: **30.04.2008**
(21) Anmeldenummer: 04005901.6
(22) Anmeldetag: 12.03.2004
(51) Int. Cl.: F16K 17/30

(54) **Schlauchbruch-Ventil**
Hose rupture valve
Soupape pour la rupture de tuyaux

(30) Priorität: 31.07.2003 DE 20311848 U
(43) Veröffentlichungstag der Anmeldung: 02.02.2005
(73) Patentinhaber: HAWE Hydraulik GmbH & Co. KG, 81673 München (DE)
(72) Erfinder: Heusser, Martin, 81245 München (DE); Laembgen, Willi, 85461 Bockhorn (DE)
(74) Vertreter: Grünecker, Kinkeldey, Stockmair & Schwanhäusser Anwaltssozietät

(56) Entgegenhaltungen:
- EP-A- 1 314 921
- WO-A-02/16813
- DE-B- 2 500 552
- FR-A- 2 636 379
- US-A- 4 934 405

## Beschreibung

Die Erfindung betrifft ein Schlauchbruch-Ventil der im Oberbegriff des Anspruchs 1 angegebenen Art.

Ein Schlauchbruch-Ventil soll unter der durch einen Schlauchbruch hervorgerufenen Druckdifferenz bzw. Strömungsrate zuverlässig absperren, im normalen Hydraulik-Steuerbetrieb hingegen die Druckströmung in beiden Strömungsrichtungen mit dem vorbestimmten Sollquerschnitt zulassen.

Bei dem aus EP 1 314 921 A bekannten Schlauchbruch-Ventil ist der die Sperrscheibe tragende Schaft in einer Kreisringscheibe montiert, die durch einen Sicherungsring an einer Schulter des Kanals lagegesichert ist und die Durchgangsbohrungen aufweist, die den Sollquerschnitt definieren. Im Stirnende des dem Dichteinstich zugeordneten Schraubendes ist ein kegelförmiger Dichtsitz für eine kegelige Sitzfläche der Sperrscheibe geformt. Der Dichteinstich ist für die dichte Montage des Schlauchbruch-Ventils entscheidend und begrenzt einen Maximaldurchmesser, der nicht überschritten werden kann. Damit der Soll-Querschnitt erreicht wird, müssen in der Scheibe viele Durchgangsbohrungen dicht beieinander vorgesehen werden, und hat der Schaft einen relativ kleinen Durchmesser, dort, wo er in der Scheibe montiert ist. Aus diesem Konzept resultiert eine relativ instabile Positionierung des Schafts und der Sperrscheibe. Außerdem besteht das Schlauchbruch-Ventil aus vielen Einzelteilen, die eine aufwendige Montage bedingen.

Bei dem aus WO02/16813 A bekannten Ventil enden die Durchgangsbohrungen in einem Ringraum angrenzend an den Dichteinstich. Der mit einem Schraubkopf fixierte Schaft für die Sperrscheibe begrenzt den nutzbaren Durchgangsquerschnitt unzweckmäßig.

Bei den aus DE 25 00 552 B, FR 26 36 379 A und US 4 934 405 A bekannten Sicherheitsventilen handelt es sich um sogenannte Einschraubventile, die in eine Innenbohrung eingebracht werden, und deren nutzbarer Durchgangsquerschnitt durch keinen Dichteinstich beschränkt wird. In der DE 25 00 552 B sind nur kurze Durchgangsbohrungen ausgehend vom Dichtsitz bis in einen Ringraum vorgesehen. In der FR 26 36 379 A besteht jede Durchgangsbohrung aus einem kleindurchmessrigen, am Dichtsitz beginnenden Abschnitt, und einem fortsetzenden großdurchmessrigen Abschnitt. In der US 4 934 405 A münden die langen, vom Dichtsitz ausgehenden Durchgangsbohrungen in einem Ringraum.

Der Erfindung liegt die Aufgabe zugrunde, ein Schlauchbruch-Ventil der eingangs genannten Art anzugeben, das einfach und kostengünstig herstellbar ist, und bei dem der Schaft und die Sperrscheibe stabil positioniert sind.

Die gestellte Aufgabe wird mit den Merkmalen des Anspruchs 1 gelöst.

Da der Kern mit dem Gehäuse einstückig und über die Stege stabil in dem Schraubende abgestützt ist, lässt sich der Schaft im Kern sehr stabil montieren. Die Axialbohrungen, die den Soll-Querschnitt definieren, sind so weit wie möglich nach außen gesetzt und so dimensioniert, dass zwischen ihnen stabile Stege entstehen. Da die Stege nicht nur den Kem stabil abstützen, sondern das gesamte Einschraubende aussteifen, kann die verbleibende Wandstärke im Bereich des Dichteinstichs relativ schwach sein, was dem Sollquerschnitt zugute kommt, und dennoch die Anforderungen an die erforderliche Druckfestigkeit erfüllen lässt. Mit den nach innen offenen Axialnuten, die die Axialbohrungen in der Innenwand des Kanals bilden, hat das Druckmittel großen Querschnitt zur Verfügung, über den es ohne nennenswerte Drosselung entweder in die Axialbohrungen oder in den Kanal strömt. Das Schlauchbruch-Ventil ist einfach herstellbar, weil alle die Strömungsführung betreffenden Bearbeitungsmaßnahmen im Gehäuse und von beiden Seiten her durchführbar sind, und nur mehr der Schaft für die Sperrscheibe montiert zu werden braucht. Die relativ dünne Wandstärke im Bereich des Dichteinstichs hat wegen der mittragenden Stege keinen negativen Einfluss auf die Gebrauchseigenschaft des Schlauchbruch-Ventils.

Der Strömungsübergang vom Kanal in die Axialbohrungen bzw. umgekehrt kann noch verbessert werden, wenn außerhalb des Bereichs des Dichteinstichs in der Innenwand des Kanals eine Umfangsnut geformt wird, mit der sich die Enden der Axialnuten verschneiden.

Der Kern erstreckt sich zweckmäßig bis zum Stirnende des dem Dichteinstich zugeordneten Schraubendes, so dass mittels der langen Axialbohrungen Verwirbelungszonen für die Druckmittelströmung vermieden werden. Der Kem kann ferner vom Stirnende her aufgebohrt sein, um die Montage der die Sperrscheibe beaufschlagenden Feder zu ermöglichen, die sich damit nicht im direkten Druckmittelstromweg befindet, sondern abgeschirmt ist.

Da bei bestimmten Sicherheitsanforderungen eine vollständig hermetische Absperrung bei einem Schlauchbruch nicht gewünscht ist, kann bei einer bevorzugten Ausführungsform die Sperrscheibe wenigstens eine Blendenöffnung enthalten, die trotz der Stege und dank der z.B. zur Sperrscheibe offenen Ringnut unabhängig von der Drehposition der Sperrscheibe einen vorbestimmten Leckagestrom zulässt.

Der Kanal kann sich mit einem zylindrischen Bohrungsabschnitt direkt bis zu dem Kern erstrecken, d.h. als eine Art Blindbohrung ausgebildet sein, die von den Axialbohrungen verlängert wird.

Schließlich ist es zweckmäßig, den Dichtsitz direkt an der Stirnfläche des Schraubendes anzuordnen. Dies ermöglicht eine einfache Ausbildung der Sperrscheibe und sichert dennoch eine hervorragende Abdichtung.

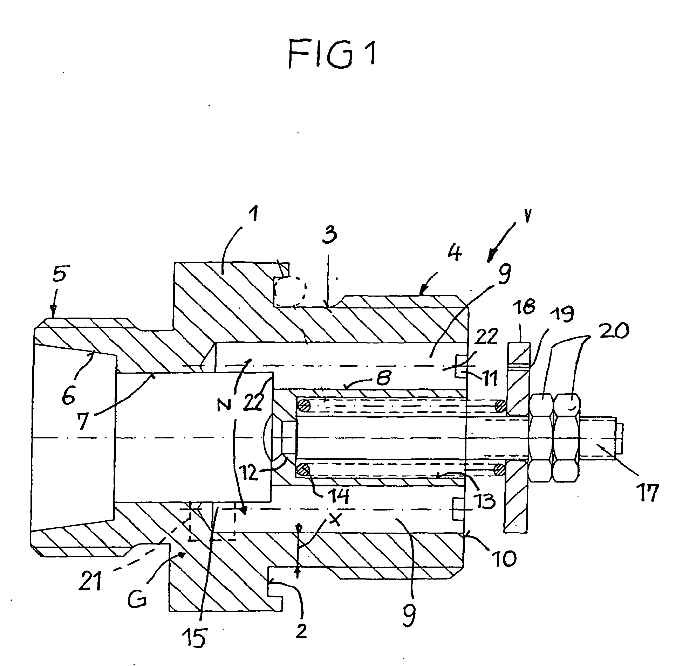

Eine Ausführungsform des Erfindüngsgegenstandes wird anhand Fig. 1 erläutert, die ein Axialschnitt eines Schlauchbruch-Ventils in normaler Betriebsstellung ist.

Das Schlauchbruch-Ventil V in Fig. 1, oder auch Schlauchbruch-Rohrverschraubung genannt, weist ein rohrartiges Gehäuse G auf, auf dem außenseitig eine umlaufende Schulter 1 angeformt ist, die Schraubenden 4, 5 mit Außengewindeabschnitten voneinander trennt. Dem Schraubende 4 ist an der Schulter 1 ein Dichteinstich 2, 3 zugeordnet, der aus einer in etwa radialen hinterschnittenen Anlagefläche 2 für ein nicht gezeigtes Dichtelement, und einer inneren Umfangsfläche 3 für das Dichtelement besteht, wobei die Umfangsfläche 3 in etwa mit dem Kerndurchmesser des Außengewindeabschnitts des Schraubendes 4 übereinstimmt.

Das Gehäuse G wird von einem Kanal 7 durchsetzt, der an einem üblichen Konussitz 6 beginnt und sich nach Art einer Blindbohrung bis zu einem mit dem Gehäuse G einstückigen Kern 8 erstreckt. Der Kern 8 endet mit einer radialen Endfläche innerhalb des Bereiches des Dichteinstichs 2, 3, und erstreckt sich bis maximal zum Stirnende des Schraubendes 4. Der Kern 8 wird begrenzt von mit ihren Achsen auf einem vorbestimmten Durchmesser angeordnete Axialbohrungen 9, die am Stirnende des Schraubendes 4 beginnen und sich bis über den Bereich des Dichteinstiches 2, 3 hinaus erstrecken und im letztgenannten Bereich mit der Innenwand des Kanals 7 (einem zylindrischen Bohrungsabschnitt) so verschnitten sind, dass nach innen offene Axialnuten N entstehen. In diesem Bereich ist die Wandstärke X des Gehäuses relativ dünn. Die Wandstärke X beträgt beispielsweise nur 10 bis 20 %, vorzugsweise etwa 15 %, des Innendurchmessers des zylindrischen Bohrungsabschnitts des Kanals 7. Diese geringe Wandstärke X hat aber keinen nachteiligen Einfluss auf die Gebrauchseigenschaften und die Festigkeit des Gehäuses G, weil die Gestaltfestigkeit über zwischen den Axialbohrungen 9 gebildete Stege 22 erhöht wird. Die Stege 22, die die Axialbohrungen 9 voneinander trennen, erstrecken sich zweckmäßig über die gesamte Länge des Kerns 8, so dass am Stirnende des Schraubendes 4 ein ringförmiges Bohrungsmündungsbild vorliegt.

Am Stirnende des Schraubendes 4 ist eine radial zur Achse des Gehäuses G orientierte ringförmige Sitzfläche 10 vorgesehen. Vorzugsweise ist im Stirnende eine nach axial außen offene Umfangsnut 11 eingeformt, deren Zweck später erläutert wird.

Der Kern 8 hat einen Schafteinpassabschnitt 12 an seinem zum Kanal 7 weisenden Ende und ist vom anderen Ende her bei 13 aufgebohrt. Im Schafteinpassabschnitt 12 ist ein Ende eines Schafts 17 festgelegt, z.B. eingepresst, der eine Sperrscheibe 18 trägt, die durch eine im aufgebohrten Teil des Kerns 8 untergebrachte Feder 14 in Anlage an einem Anschlag, z.B. Kontermuttern 20, gehalten wird. In der Sperrscheibe 18 kann eine Blendenöffnung 19 geformt sein, auf die die Ringnut 11 ausgerichtet ist, so dass die Blendenöffnung unabhängig von der Drehposition der Sperrscheibe 18 durchgängig bleibt. Die Ringnut 11 könnte alternativ auch in der Sperrscheibe 18 geformt sein, oder zumindest nur ein Abschnitt einer Umfangsnut, der länger ist als die Breite eines Stegs 22.

Die Axialbohrungen 9 sind über den Bereich des Dichteinstichs 2, 3 hinaus verlängert und mit ihren Achsen so weit im Radialabstand von der Achse des Gehäuses G positioniert, dass sie innerhalb des Bereiches des Dichteinstichs 2, 3 nach innen offene Axialnuten N in der Innenwand des zylindrischen Bohrungsabschnitts des Kanals 7 formen. Gegebenenfalls wird (gestrichelt angedeutet) an der dem Bereich des Dichteinschnitts 2, 3 abgewandten Seite des Kerns 8 in der Innenwand des Kanals 7 ein nach innen offener nutartiger Einstich oder eine Ringnut 21 vorgesehen.

Das Schlauchbruch-Ventil wird mit üblichen Verschraubungen in einem Rohr- oder Schlauchstrang oder einen anderen Druckmittel-Strömungsweg montiert und einerseits im Konussitz 6 und andererseits im Dichteinstich 2, 3 hermetisch abgedichtet. Der Abstand der Sperrscheibe 18 vom Dichtsitz 10 ist so eingestellt, dass der durch die Axialbohrungen 9 definierte Sollquerschnitt auch zum Außenrand der Sperrscheibe hin vorliegt. Im Normalbetrieb bleibt die Sperrscheibe 18 in der in Fig. 1 gezeigten Position und das Druckmittel kann in beiden Strömungsrichtungen gesteuert strömen.

Kommt es beispielsweise zu einem Schlauchbruch an der dem Schlauchbruch-Ventil V linken Seite, dann spricht die Sperrscheibe 18 auf die dann auftretende Druckdifferenz oder Strömungsrate an, indem sie gegen die Kraft der Feder 14 in einen Dichtschluss mit dem Dichtsitz 10 geschoben wird und absperrt. Ist, beispielsweise, die Blendenöffnung 19 vorgesehen, dann bleibt selbst in der Absperrstellung ein Leckageweg offen.

Sobald der Schlauchbruch behoben ist, stellt sich die Sperrscheibe 18 unter der Federkraft wieder in die Passivstellung zurück.

## Patentansprüche

1. Schlauchbruch-Ventil (V), mit einem einen Kanal (7) enthaltenden Gehäuse (G), an dem durch einen einseitigen Dichteinstich (2, 3) getrennte Schraubenden (4, 5) vorgesehen sind, mit einem im Kanal zentral innerhalb von einen Sollquerschnitt definierenden Durchgangsbohrungen montierten Schaft (17), der eine verschiebbare Sperrscheibe (18) trägt, und mit einem ringförmigen Dichtsitz (10) für die Sperrscheibe (18) am dem dem Dichteinstich (2, 3) zugeordneten Schraubende (4), **dadurch gekennzeichnet, dass** der Schaft (17) in einem Gehäuse-Kern (8) montiert ist, der über mehrere, zwischen um den Kern (8) verteilten Axialbohrungen (9) gebildete Stege (22) im den Dichtsitz (10) aufweisenden Schraubende (4) abgestützt und mit dem Gehäuse (G) einstückig ist, und dass die Axialbohrungs-Achsen relativ zur Achse des Gehäuses (G) derart angeordnet und vom Dichtsitz (10) ausgehend axial zumindest bis in den Bereich des Dichteinstichs (2, 3) verlängert sind, dass die Axialbohrungen (9) in der Innenwand des Kanals (7) nach innen offene Nuten (N) bilden.

2. Schlauchbruch-Ventil nach Anspruch 1, **dadurch gekennzeichnet, dass** in der Innenwand des Kanals (7) an der dem Dichtsitz (10) abgewandten Seite des Bereichs des Dichteinstichs (2, 3) eine nach innen offene Umfangsnut (21) geformt ist, mit der sich die bis über den Bereich des Dichteinstichs (2, 3) hinweg verlaufenden Axialnuten (N) überschneiden.

3. Schlauchbruch-Ventil nach Anspruch 1, **dadurch gekennzeichnet, dass** der Gehäuse-Kern (7) maximal auf der Höhe des Stirndichtsitzes (10) endet und vom Ende her bis zu einem Schafteinpassabschnitt (12) aufgebohrt ist, und dass eine die Sperrscheibe (18) beaufschlagende Feder (14) im aufgebohrten Teil des Kerns untergebracht ist.

4. Schlauchbruch-Ventil nach einem der Ansprüche 1 bis 3, **dadurch gekennzeichnet, dass** die Sperrscheibe (18) auf einem vorbestimmten Durchmesser wenigstens eine Blendenöffnung (19) aufweist, und dass entweder in den Stegen (22) eine im Umfangsrichtung durchgehende, zur Sperrscheibe (18) offene Ringnut (11) eingeformt ist, deren mittlerer Durchmesser zumindest in etwa dem vorbestimmten Durchmesser entspricht, auf dem die Blendenöffnung (19) angeordnet ist, oder in der Sperrscheibe (18) in der zum Dichtsitz (10) weisenden Seite eine die Blendenöffnung (19) überschneidende Nut oder Ringnut vorgesehen ist.

5. Schlauchbruch-Ventil nach Anspruch 1, **dadurch gekennzeichnet, dass** der Kanal einen zylindrischen Bohrungsabschnitt aufweist, der an einem Konussitz (6) beginnt und am Kern (7) endet.

6. Schlauchbruch-Ventil nach wenigstens einem der vorhergehenden Ansprüche, **dadurch gekennzeichnet, dass** die im Bereich des Dichteinstichs (2, 3) durch die Axialbohrungen (9) definierte Wandstärke (X) zwischen etwa 10 bis 20 %, vorzugsweise etwa 15 %, des Durchmessers des zylindrischen Bohrungsabschnitts des Kanals (7) beträgt.

7. Schlauchbruch-Ventil nach Anspruch 1, **dadurch gekennzeichnet, dass** der Dichtsitz (10) an der Stirnfläche des dem Dichteinstich (2, 3) zugeordneten Schraubendes (4) vorgesehen und radial orientiert ist.

## Claims

1. Hose-break valve (V), with a housing (G) which contains a duct (7) and on which screw ends (4, 5) separated by a one-sided sealing indentation (2, 3) are provided, with a shank (17) which is mounted in the duct centrally within through-bores defining a desired cross section and which carries a displaceable stop disc (18), and with an annular sealing seat (10) for the stop disc (18) at the screw end (4) assigned to the sealing indentation (2, 3), **characterized in that** the shank (17) is mounted in a housing core (8) which is supported, via a plurality of webs (22) formed between axial bores (9) distributed around the core (8), in the screw end (4) having the sealing seat (10) and which is in one piece with the housing (G), and **in that** the axial-bore axes are arranged in relation to the axis of the housing (G) and, emanating from the sealing seat (10), are prolonged axially at least into the region of the sealing indentation (2, 3), in such a way that the axial bores (9) form inwardly open grooves (N) in the inner wall of the duct (7).

2. Hose-break valve according to Claim 1, **characterized in that** in the inner wall of the duct (7), on that side of the region of the sealing indentation (2, 3) which faces away from the sealing seat (10), an inwardly open circumferential groove (21) is formed, with which the axial groove (N) running over and beyond the region of the sealing indentation (2, 3) overlap.

3. Hose-break valve according to Claim 1, **characterized in that** the housing core (7) terminates, at most, level with the end-face sealing seat (10) and is drilled open from the end as far as a shank fitting portion (12), and **in that** a spring (14) loading the stop disc (18) is accommodated in the drilled-open part of the core.

4. Hose-break valve according to one of Claims 1 to 3, **characterized in that** the stop disc (18) has on a predetermined diameter at least one diaphragm orifice (19), and **in that** either a circumferentially continuous annular groove (11), which is open to the stop disc (18) and the average diameter of which corresponds at least approximately to the predetermined diameter on which the diaphragm orifice (19) is arranged, is provided in the webs (22) or a groove or annular groove overlapping the diaphragm orifice (19) is provided in the stop disc (18) in the side facing the sealing seat (10).

5. Hose-break valve according to Claim 1, **characterized in that** the duct has a cylindrical bore portion which starts at a conical seat (6) and ends at the core (7).

6. Hose-break valve according to at least one of the preceding claims, **characterized in that** the wall thickness (X) defined in the region of the sealing indentation (2, 3) by the axial bores (9) amounts to between about 10 and 20%, preferably to about 15%, of the diameter of the cylindrical bore portion of the duct (7).

7. Hose-break valve according to Claim 1, **characterized in that** the sealing seat (10) is provided on the end face of the screw end (4) assigned to the sealing indentation (2, 3) and is oriented radially.

## Revendications

1. Soupape (V) pour la rupture de tuyau présentant un boîtier (G) comprenant un canal (7), sur lequel sont prévues des extrémités de vis (4, 5) séparées par une entaille étanche (2, 3) d'un côté, une tige (17) montée dans le canal centralement au sein de perçages traversants définissant une section de consigne, laquelle tige porte une rondelle d'arrêt (18) mobile, et un siège étanche (10) annulaire pour la rondelle d'arrêt (18) sur l'extrémité de vis (4) associée à l'entaille étanche (2, 3), **caractérisée en ce que** la tige (17) est montée dans une partie centrale (8) du boîtier qui est appuyée par le biais de plusieurs traverses (22) formées entre des perçages axiaux (9) répartis autour de la partie centrale (8) dans l'extrémité de vis (4) présentant le siège étanche (10) et est formée d'un seul tenant avec le boîtier (G), et **en ce que** les axes de perçages axiaux sont disposés par rapport à l'axe du boîtier (G) de telle sorte que les perçages axiaux (9) forment dans la paroi interne du canal (7) des rainures (N) ouvertes vers l'intérieur, et sont prolongés en partant du siège étanche (10) axialement au moins jusque dans la zone de l'entaille étanche (2, 3).

2. Soupape pour la rupture de tuyau selon la revendication 1, **caractérisée en ce que** dans la paroi interne du canal (7) sur le côté de la zone de l'entaille étanche (2, 3) opposé au siège étanche (10) est formée une rainure périphérique (21) ouverte vers l'intérieur, à l'aide de laquelle les rainures axiales (N) s'étendant au-delà de la zone de l'entaille étanche (2, 3) se recoupent.

3. Soupape pour la rupture de tuyau selon la revendication 1, **caractérisée en ce que** la partie centrale de boîtier (7) se termine au maximum à la hauteur du siège étanche frontal (10) et est alésée depuis l'extrémité jusqu'à une section adaptée à la tige (12), et **en ce qu'**un ressort (14) sollicitant la rondelle d'arrêt (18) est logé dans la partie alésée de la partie centrale.

4. Soupape pour la rupture de tuyau selon l'une quelconque des revendications 1 à 3, **caractérisée en ce que** la rondelle d'arrêt (18) présente sur un diamètre prédéterminé au moins un orifice d'étranglement (19), et **en ce qu'**une rainure annulaire (11) ouverte vers la rondelle d'arrêt (18), traversant dans le sens circulaire est formée dans les traverses (22), dont le diamètre moyen correspond à peu près au diamètre prédéterminé sur lequel est disposé l'orifice d'étranglement (19), ou une rainure recoupant l'orifice d'étranglement (19) ou une rainure annulaire est prévue dans la rondelle d'arrêt (18) dans le côté dirigé vers le siège étanche (10).

5. Soupape pour la rupture de tuyau selon la revendication 1, **caractérisée en ce que** le canal présente une section de perçage cylindrique qui commence sur un siège conique (6) et se termine sur la partie centrale (7).

6. Soupape pour la rupture de tuyau selon au moins l'une quelconque des revendications précédentes, **caractérisée en ce que** l'épaisseur de paroi (X) définie dans la zone de l'entaille étanche (2, 3) par les perçages axiaux (9) est comprise entre environ 10 et 20 %, de préférence à peu près 15 % du diamètre de la section de perçage cylindrique du canal (7).

7. Soupape pour la rupture de tuyau selon la revendication 1, **caractérisée en ce que** le siège étanche (10) est prévu sur la face frontale de l'extrémité de vis (4) associé à l'entaille étanche (2, 3) et est orienté radialement.
